# EUROPEAN PATENT SPECIFICATION

(11) **EP 1 381 189 B1**
(45) Date of publication and mention of the grant of the patent: **21.09.2005**
(21) Application number: 02254806.9
(22) Date of filing: 09.07.2002
(51) Int. Cl.: H04L 12/46

(54) **Multi-bridge for a plurality of mutually different subnetworks**
Mehrfach-Brücke für eine Vielzahl gegenseitig unterschiedlichen Teilnetzwerken
Passerelle multi-ports pour une pluralité de sous reseaux de types differents

(43) Date of publication of application: 14.01.2004
(73) Proprietor: LUCENT TECHNOLOGIES INC., Murray Hill, New Jersey 07974-0636 (US)
(72) Inventor: De Man, Ronald, 2515 HC Den Haag (NL)
(74) Representative: Sarup, David Alexander

(56) References cited:
- US-A- 5 892 912
- US-A- 6 061 334
- US-A- 6 101 188
- US-B1- 6 223 218
- ANONYMOUS: "Forwarding Domains Across Multiple Virtual LANs" RESEARCH DISCLOSURE, vol. 41, no. 416, 1 December 1998 (1998-12-01), XP002211595 Havant, UK, article No. 416117

## Description

### BACKGROUND OF THE INVENTION

The invention relates to a multi-bridge for use in a network that contains a plurality of subnetworks.

A network of communication links may be split into subnetworks. A physical subnetwork usually is separated from other physical subnetworks for business or security reasons. Each subnetwork comprises a number of bridges and a number of links, such as for instance Ethernet links. Each bridge has a port for each link. Each bridge is arranged to forward data packets which are received by a port of the bridge either via another port of the bridge to another bridge of the subnetwork, or, if possible, directly to a device with a destination address which is usually connected to one of the bridges. The data packets comprise information related to the destination address, allowing for the correct forwarding of a data packet by a bridge.

Adjacent subnetworks may share a multi-bridge capable of forwarding data packets to ports for both subnetworks. The multi-bridge comprises for each subnetwork a set of at least two ports. To allow for optimal use of the bandwidth available on a subnetwork, a number of mutually different and logically segregated Virtual Local Area Networks (VLANs) may make use of the subnetworks.

In a situation where a subnetwork may be used by a number of mutually different VLANs, data packets comprise information that identifies the VLAN over which the data packet is sent. This information is usually referred to as an identifier (VLAN ID). The multi-bridge is capable of extracting the VLAN ID from a data packet. This will enable the multi-bridge to forward a data packet not only via the correct port, but also via the correct VLAN.

However, the information that identifies the VLANs is preferably used dynamically. VLANs with a given identifier may stop using one subnetwork and subsequently another VLAN with the same identification may start using another network. This may for instance be a result of the desire of customers to use another subnetwork.

The identifier of the VLAN is used to determine the ports of the multi-bridge to which the data packets are forwarded. The multi-bridge registers for each VLAN to which ports data packets with the identifier of that VLAN must be forwarded. When a packet is received, the multi-bridge extracts the identifier and forwards the data packet according to the registered ports for that identifier. The temporary nature of a VLAN on a subnetwork has consequences for the forwarding of a data packet. If a data packet comprises information related to the VLAN in which it has to be forwarded, conflicting information may be available to the bridge with regard to the port via which the data packet should be forwarded if an old identifier is used for a newly created VLAN . Therefore the registration must be updated. The update of the registration of a VLAN may take place either manually, costing much time and energy or may take place by carrying out a highly complex protocol such as the GVRP protocol as described in IEEE 802. 1q.

Accordingly, it is an object of the invention to provide a multi-bridge for a plurality of mutually different subnetworks wherein the multi-bridge is arranged such that a fast and easy registration of a VLAN on a set of at least two ports for a subnetwork, is possible.

It is a further object of the invention to provide a multi-bridge which is arranged to avoid registration of one VLAN on a plurality of mutually different sets of at least two ports.

It is an even further object of the invention to provide a multi-bridge which is arranged to indicate an undesired regular switching of registration of a VLAN from one set of at least two ports to another set of at least two ports.

It is known from the paper by ANONYMOUS entitled "Forwarding Domains Across Multiple Virtual LANs' RESEARCH DISCLOSURE, vol. 41, no. 416, 1 December 1998 (1998 - 12 - 01), XP002211595 Havant, UK, article No. 416117 to provide a multi-bridge for use in a network that contains a plurality of subnetworks, wherein the multi-bridge comprises for each subnetwork a set of at least two ports, the multi-bridge being arranged to register which of the ports are used by a Virtual Local Area Network, wherein the multi-bridge is arranged to forward a data packet which is sent with an identifier that identifies the VLAN to those of the ports that the VLAN is registered to use.

### SUMMARY OF THE INVENTION

The present invention is characterised over the disclosure of the above-mentioned paper in that the multi-bridge is arranged to register upon receiving a data packet by one of the at least two ports of a particular set, that the VLAN identified by the identifier of the data packet uses the ports of the particular set.

In accordance with one of the above mentioned objects, the invention provides a multi-bridge for a plurality of mutually different subnetworks. This multi-bridge comprises for each subnetwork a set of at least two ports. The multi-bridge is arranged to forward a data packet which is sent over a Virtual Local Area Network (VLAN) if the data packet is received by one of the at least two ports of the set on which that VLAN is registered. The multi-bridge is further arranged to register upon receiving a data packet by one of the at least two ports of a set, on each of the at least two ports of that set, if needed, the VLAN over which that data packet is sent. This has the advantage that no extra time and energy consuming work is needed to ensure the registration of a new VLAN on a set of at least two ports. The registration of a VLAN according to the invention comprises a simple and fast action. Use of a complex protocol such as the GVRP protocol is unnecessary.

The registration is strictly speaking only needed if the VLAN over which the data packet is sent has not already been registered on the set of at least two ports out of which by one port the data packet is received. It is however not excluded that the multi-bridge is arranged such that any data packet which is received by one port of a set needs to be registered on that set anyway.

In accordance with another aspect of the invention the multi-bridge is further arranged to de-register on the at least two ports of each set that is different from the set of which one of the at least two ports has received the data packet, if needed, the VLAN over which that data packet is sent.
This avoids multiple registration of a VLAN. The de-registration of the VLAN on a set which is different from the set on which the data packet has been received, occurs before, or at the same time of, the registration of the VLAN.

In accordance with yet another aspect of the invention the multi-bridge is further arranged to provide an alarm signal if within a predetermined time span and by a predetermined number of times one VLAN is successively registered and de-registered on one set. This may for instance occur if after registration of a VLAN on a first set of at least two ports and de-registration of that VLAN on a second set of at least two ports, a data packet which is send over that VLAN still arrives at the second set of at least two ports. The alarm signal which is then provided according to one aspect of the invention may comprise for instance a visual and or audible signal to an operator who can act appropriately .

The invention is further related to a network comprising such a bridge for a plurality of subnetworks.

The invention is also related to a method for allocating a Virtual Local Area Network (VLAN) to one set out of a number of such sets on a multi-bridge as described above.

### BRIEF DESCRIPTION OF THE DRAWINGS

The invention is further illustrated by the following, non-limiting drawing. Herein shows:
figure 1 schematically a communication network ;
figure 2 a flow chart of a first aspect of the method according to the invention;
figure 3 a flow chart of a second aspect of the method according to the invention; and
figure 4 a flow chart of a third aspect of the method according to the invention.

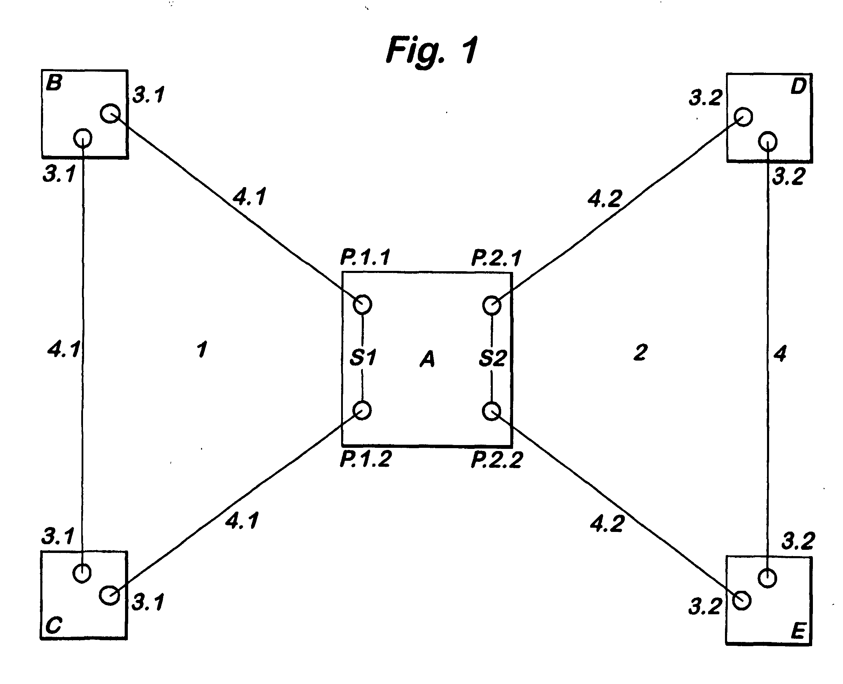

Figure 1 shows a communication network with two subnetworks 1 and 2. Subnetwork 1 comprises the bridges B, C and multi-bridge A and links 4.1 between the bridges A, B, C and subnetwork 2 comprises the bridges D, E and multi-bridge A and links 4.2 between the bridges A, D, E. In other words, the two subnetworks 1,2 share multi-bridge A. Each bridge B,C of subnetwork 1 has two ports 3.1 for links 4.1 within subnetwork 1. Multi-bridge A has a set s1 of two ports p.1.1, p.1.2 for subnetwork 1. Each bridge D,E of subnetwork 2 has a port 3.2 for each link 4.2 within subnetwork 2. Multi-bridge A has a set s.2 of two ports 3.2. for subnetwork 2.

In operation data packets are sent via links 4.1, 4.2 and bridges A,B,C,D,E through the network. The bridges A,B, C, D, E in the network are arranged to support a plurality of Virtual Local Area Networks (VLANs). Each VLAN behaves as an individual network, but the plurality of VLAN shares use of the bridges A, B, C, D, E and links 4.1 and 4.2 in the network. Each VLAN is limited to a subnetwork. Each VLAN has its own identifier VLAN ID. When a data packet is sent via a VLAN the identifier VLAN ID is included in the data packet.

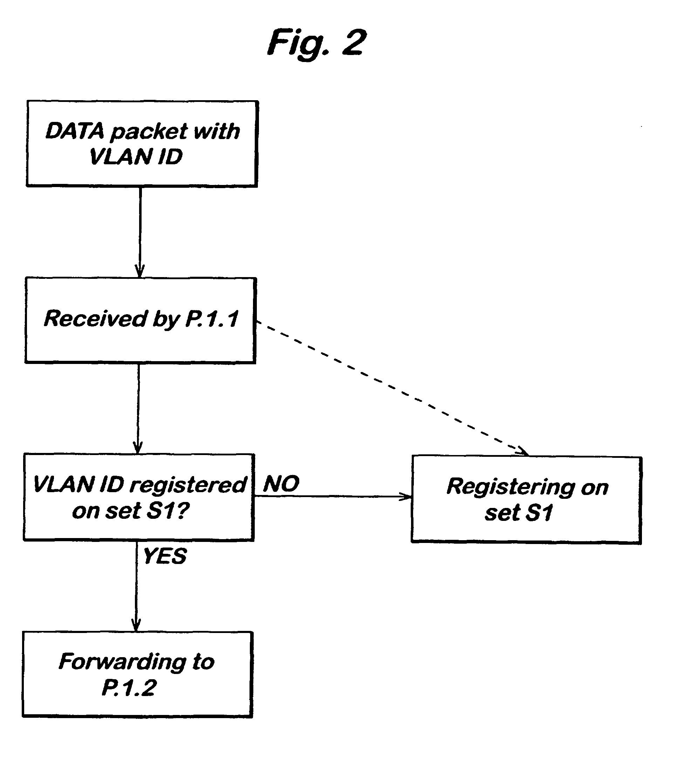

Multi-bridge A registers for each identifier ID which subnetwork is used by the VLAN that corresponds to that ID. Multi-bridge A is according to the invention arranged to carry out the method as schematically outlined in the flow-chart of figure 2. On receiving at port p.1.1 of the two ports p.1.1, p.1.2 of set s 1 on multi-bridge A a data packet comprising a VLAN with identity ID related to the Virtual Local Area Network (VLAN) over which it is sent, multi-bridge A checks whether the VLAN ID has been registered in multi-bridge A. If the VLAN ID has been registered the data packet is forwarded to port p.1.2 or ports of the subnetwork that is used by the VLAN that corresponds to the ID (except preferably on the port at which the data packet was received).

If multi-bridge A determines that the VLAN ID has not been registered, multi-bridge A registers that the VLAN that corresponds to the VLAN ID from the data packet uses the subnetwork, *i.e.* the set of ports, that contains the port on which the packet was received, implying that the VLAN ID is registered at port p. 1.1 and port p.1.2. The data packet which was sent over the VLAN with identifier ID and received at port p. 1.1 can then be forwarded by the multi-bridge via the port p.1.2 onto which the VLAN with identifier ID is registered. In another embodiment port p.1.1 does not check whether the VLAN ID has been registered on set s 1. In that case the VLAN ID is registered on set s 1 anyway, implying that the VLAN ID is registered on port p.1.1 and port pl.2. This is shown by the broken line in figure 2

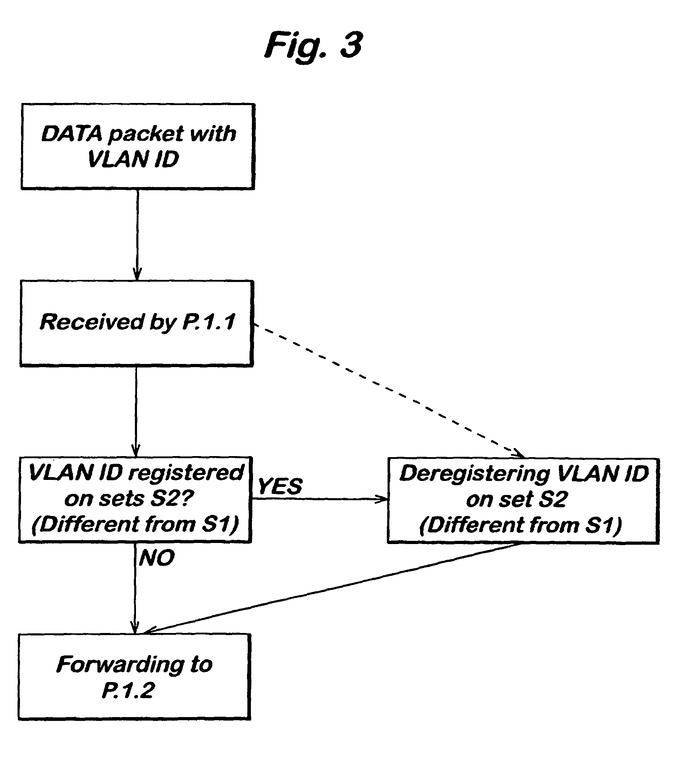

Additionally, multi-bridge A may according to the invention be arranged to carry out the method as schematically outlined in the flow-chart of figure 3. On receiving at one port p. 1.1 of the two ports p.1.1, p.1.2 of set s1 on multi-bridge A a data packet comprising a VLAN identity ID related to the Virtual Local Area Network (VLAN) over which it is sent, port p.1.1 may check whether the VLAN ID has been registered at set s2 which is different from set s1. If the VLAN ID has not been registered on set s2, no action is undertaken and the data packet is forwarded to p.1.2. If the VLAN ID has been registered at set s2, the VLAN ID is de-registered on set s2, implying that the VLAN ID is de-registered at port p.2.1 and port p.2.2. It may also be the case that port p. 1.1 does not check whether the VLAN ID has been registered on set 2. In that case the VLAN ID is de-registered anyway on set 2, implying that the VLAN ID is de-registered on port p.2.1 and port p.2.2. This is shown by the broken line in fig. 3

The order of checking registration on set s1 and checking registration on set s2 is irrelevant. Checking registration on set s1 and checking on set s2 may also occur simultaneously. The order of registration, if needed, and de-registration, if needed, is always such that de-registration does not take place after registration.

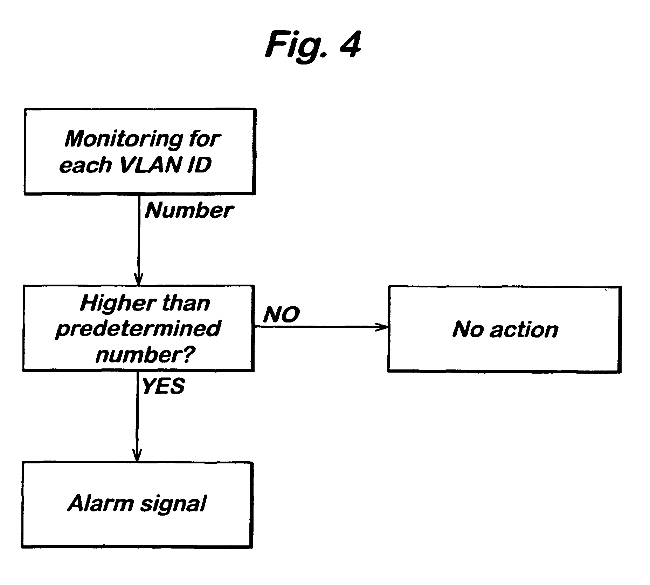

In addition to these methods, bridge A may be arranged to carry out the method as schematically outlined in the flow-chart of figure 4. The number of times each VLAN ID is registered and de-registered on one set of two ports within a predetermined time span is monitored. If this number is higher than a predetermined number an alarm signal is provided to for instance an operator who can act appropriately. This signal may for example be a visual and/or audible signal. Alternatively, for each VLAN the time is monitored in which the VLAN is registered and de-registered on one set of two ports by a predetermined number of times. If this time is shorter than a predetermined time, the alarm signal is provided.
A multi-bridge according to the invention may be arranged such that the forwarding of datapackets is carried out entirely and automatically by the hardware. The registering and de-registering of a VLAN, which may be seen as instructing the hardware, may be carried out by the software. For those skilled in the art it is relatively simple to develop a multi-bridge according to the invention using known technology.

All these variations are considered to be within the scope of the invention as defined by the appended claims.

## Claims

1. Multi-bridge (A) for use in a network that contains a plurality of subnetworks (1,2), wherein the multi-bridge comprises for each subnetwork a set of at least two ports (p.1.1, p.1.2, p.2.1, p.2.2), the multi-bridge being arranged to register which of the ports are used by a Virtual Local Area Network (VLAN), wherein the multi-bridge (A) is arranged to forward a data packet which is sent with an identifier (VLAN ID) that identifies the VLAN to those of the ports that the VLAN is registered to use, **characterised in that** the multi-bridge (A) is arranged to register upon receiving a data packet by one (p.1.1) of the at least two ports (p.1.1, p.1.2) of a particular set (s1) that the VLAN identified by the identifier of the data packet uses the ports (p.1.1, p.1.2) of the particular set.

2. Multi-bridge according to claim 1, wherein the multi-bridge (A) is further arranged to de-register on the at least two ports (p.2.1, p.2.2) of each set (s2) that is different from the set (s1) of which one (p.1.1) of the at least two ports (p.2.2, p.1.2) has received the data packet, the VLAN over which that data packet is sent.

3. Multi-bridge according to claim 2 or 3, wherein the multi-bridge (A) is further arranged to provide an alarm signal if within a predetermined time span and by a predetermined number of times one VLAN is successively registered and de-registered on one set.

4. Method for allocating a Virtual Local Area Network (VLAN) to one set out of a number of such sets on a multi-bridge (A), wherein each set comprises at least two ports for a subnetwork out of a plurality of such subnetworks which share the multi-bridge (A), wherein the method comprises:
sending to one of the at least two ports of a set a data packet over a VLAN;
**characterised by**
registering the VLAN over which the data packet is send on each of the at least two ports (p.1.1,p.1.2) of the set (s1) of which one (p.1.1) of the at least two ports has received the data packet.

5. Method according to claim 4, **characterised in that**, the method further comprises:
• de-registering on the at least two ports (p.2.1, p.2.2) of each set (s2) that is different from the set (s1) of which one (p.1.1) of the at least two ports (p.1.1, p.1.2) has received the data packet, the VLAN over which that data packet is send.

6. Method according to claim 4 or 5, wherein the method comprises:
providing an alarm signal if within a predetermined time and by a predetermined number of times one VLAN is successively registered and de-registered on one set.

7. Network (A,B,C,D,E) comprising a multi-bridge (A) according to any one of the claims 1,2 or 3.

## Patentansprüche

1. Mehrfach-Brücke (A) zur Verwendung in einem Netz, das eine Mehrzahl von Teilnetzen (1,2) enthält, wobei die Mehrfach-Brücke für jedes Teilnetz eine Menge von mindestens zwei Anschlüssen (p.1.1, p.1.2, p.2.1, p.2.2) umfaßt, wobei die Mehrfach-Brücke dafür angeordnet ist, zu registrieren, welche der Anschlüsse durch ein VLAN (Virtual Local Area Network - Virtuelles Ortsnetz) benutzt werden, wobei die Mehrfach-Brücke (A) zur Weiterleitung eines Datenpakets angeordnet ist, das mit einer Kennung (VLAN ID) gesendet wird, die das VLAN für diejenigen der Anschlüsse identifiziert, für deren Benutzung das VLAN registriert ist, **dadurch gekennzeichnet, daß** die Mehrfach-Brücke (A) angeordnet ist, bei Empfang eines Datenpakets durch einen (p.1.1) der mindestens zwei Anschlüsse (p.1.1, p.1.2) einer bestimmten Menge (s1) zu registrieren, daß das durch die Kennung des Datenpakets identifizierte VLAN die Anschlüsse (p.1.1, p.1.2) der bestimmten Menge benutzt.

2. Mehrfach-Brücke nach Anspruch 1, wobei die Mehrfach-Brücke (A) weiterhin angeordnet ist, an den mindestens zwei Anschlüssen (p.2.1, p.2.2) jeder Menge (s2), die sich von der Menge (s1) unterscheidet, von der einer (p.1.1) der mindestens zwei Anschlüsse (p.2.2, p.1.2) das Datenpaket empfangen hat, das VLAN abzumelden, über das dieses Datenpaket gesendet wird.

3. Mehrfach-Brücke nach Anspruch 2 oder 3, wobei die Mehrfach-Brücke (A) weiterhin angeordnet ist, ein Alarmsignal bereitzustellen, wenn innerhalb einer vorbestimmten Zeitdauer und nach einer vorbestimmten Anzahl von Malen ein VLAN nacheinander an einer Menge registriert und abgemeldet wird.

4. Verfahren zum Zuteilen eines VLAN (Virtual Local Area Network - Virtuelles Ortsnetz) zu einer Menge aus einer Anzahl solcher Mengen an einer Mehrfach-Brücke (A), wobei jede Menge mindestens zwei Anschlüsse für ein Teilnetz aus einer Mehrzahl solcher Teilnetze umfaßt, die sich die Mehrfach-Brücke (A) teilen, mit folgendem Schritt:
Senden eines Datenpakets über ein VLAN zu einem der mindestens zwei Anschlüsse;
**gekennzeichnet durch** Registrieren des VLANs, über das das Datenpaket gesendet wird, an jedem der mindestens zwei Anschlüsse (p.1.1, p.1.2) der Menge (s1), von denen einer (p.1.1) der mindestens zwei Anschlüsse das Datenpaket empfangen hat.

5. Verfahren nach Anspruch 4, **dadurch gekennzeichnet, daß** das Verfahren weiterhin folgendes umfaßt:
• Abmelden an den mindestens zwei Anschlüssen (p.2.1, p.2.2) jeder Menge (s2) die sich von der Menge (s1) unterscheidet, von der einer (p.1.1) der mindestens zwei Anschlüsse (p.1.1, p.1.2) das Datenpaket empfangen hat, des VLANs, über das dieses Datenpaket gesendet wird.

6. Verfahren nach Anspruch 4 oder 5, wobei das Verfahren folgendes umfaßt: Bereitstellen eines Alarmsignals, wenn innerhalb einer vorbestimmten Zeit und nach einer vorbestimmten Anzahl von Malen, ein VLAN nacheinander an einer Menge registriert und abgemeldet wird.

7. Netz (A, B, C, D, E) mit einer Mehrfach-Brücke (A) nach einem der Ansprüche 1, 2 oder 3.

## Revendications

1. Pont à ports multiples (A) destiné à être utilisé dans un réseau qui contient une pluralité de sous-réseaux (1, 2), dans lequel le pont à ports multiples comprend pour chaque sous-réseau un ensemble d'au moins deux ports (p.1.1, p.1.2, P.2.1, p.2.2), le pont à ports multiples étant agencé pour enregistrer ceux des ports qui sont utilisés par un Réseau local virtuel (VLAN), dans lequel le pont à ports multiples (A) est agencé pour acheminer un paquet de données qui est envoyé avec un identifiant (ID VLAN) qui identifie le VLAN auprès des ports que le VLAN peut utiliser en fonction de son enregistrement, **caractérisé en ce que** le pont à ports multiples (A) est agencé pour enregistrer sur réception d'un paquet de données par l'un (p.1.1) des au moins deux ports (p.1.1, p.1.2) d'un ensemble particulier (s1) que le VLAN identifié par l'identifiant du paquet de données utilise les ports (p.1.1, p.1.2) de l'ensemble particulier.

2. Pont à ports multiples selon la revendication 1, dans lequel le pont à ports multiples (A) est en outre agencé pour désenregistrer sur les au moins deux ports (p.2.1, p.2.2) de chaque ensemble (s2) qui est différent de l'ensemble (s1) dont au moins un (p.1.1) des au moins deux ports (p.2.2, p.1.2) a reçu le paquet de données, le VLAN sur lequel ce paquet de données est envoyé.

3. Pont à ports multiples selon la revendication 2 ou 3, dans lequel le pont à ports multiples (A) est en outre agencé pour fournir un signal d'alarme si dans un espace de temps prédéterminé et selon un nombre de fois prédéterminé un VLAN est successivement enregistré et désenregistré sur un même ensemble.

4. Procédé d'allocation d'un Réseau local virtuel (VLAN) à un ensemble parmi un nombre de tels ensembles sur un pont à ports multiples (A), dans lequel chaque ensemble comprend au moins deux ports d'un sous-réseau parmi une pluralité de tels sous-réseaux qui se partagent le pont à ports multiples (A), dans lequel le procédé comprend :
l'envoi à l'un des aux moins deux ports d'un ensemble d'un paquet de données sur un VLAN ;
**caractérisé par**
l'enregistrement du VLAN sur lequel le paquet de données est envoyé sur chacun des au moins deux ports (p.1.1, p.1.2) de l'ensemble (s1) dont un (p.1.1) des au moins deux ports a reçu le paquet de données.

5. Procédé selon la revendication 4, **caractérisé en ce que** le procédé comprend en outre :
le désenregistrement sur les au moins deux ports (p.2.1, p.2.2) de chaque ensemble (s2) qui est différent de l'ensemble (s1) dont un (p.1.1) des au moins deux ports (p.1.1, p.1.2) a reçu le paquet de données, du VLAN sur lequel ce paquet de données est envoyé.

6. Procédé selon la revendication 4 ou 5, dans lequel le procédé comprend :
la fourniture d'une alarme si dans un espace de temps prédéterminé et selon un nombre prédéterminé de fois un VLAN est successivement enregistré et désenregistré sur un même ensemble.

7. Réseau (A, B, C, D, E) comprenant un pont à ports multiples (A) selon l'une quelconque des revendications 1, 2 ou 3.
